# EUROPEAN PATENT SPECIFICATION

(11) **EP 2 459 868 B1**
(45) Date of publication and mention of the grant of the patent: **06.11.2013**
(21) Application number: 10752185.8
(22) Date of filing: 19.07.2010
(51) Int. Cl.: F03B 13/10

(54) **UNIT FOR A HYDROELECTRIC POWER PLANT AND MODULAR HYDROELECTRIC POWER PLANT COMPRISING SAID UNIT**
EINHEIT FÜR EIN HYDROELEKTRISCHES KRAFTWERK UND MODULARES HYDROELEKTRISCHES KRAFTWERK MIT DIESER EINHEIT
UNITÉ POUR UNE CENTRALE HYDROÉLECTRIQUE ET CENTRALE HYDROÉLECTRIQUE MODULAIRE COMPRENANT LADITE UNITÉ

(30) Priority: 30.07.2009 IT TO20090592
(43) Date of publication of application: 06.06.2012
(73) Proprietor: Deandrea, Luca, 10020 Casalborgone (TO) (IT)
(72) Inventor: PORRARO, Marina, I-10040 La Loggia (TO) (IT); BAEWERT, Massimo, I-10072 Caselle Torinese (TO) (IT)
(74) Representative: Robba, Pierpaolo
(86) International application number: PCT/IB2010/053278
(87) International publication number: WO 2011/013027

(56) References cited:
- DE-A1- 10 120 434
- SE-B- 453 676
- US-A1- 2005 220 605
- US-A1- 2006 045 733
- US-A1- 2008 159 855

## Description

### DESCRIPTION

### Technical Field

The present invention refers to a unit for a hydroelectric power plant. More in particular, the present invention refers to an underwater unit for a hydroelectric power plant.

The present invention refers also to an underwater hydroelectric power plant comprising at least one such unit.

### Prior Art

Hydroelectric power plants are widely spread and used for the production of electric power.

These plants use flowing water masses for the production of electric power: water is conveyed into one or more turbines which rotate thanks to the thrust of the water; each turbine is coupled to an alternator which transforms the rotational movement into electric power. The speed given by the water to the turbines is generated through a height difference of at least 100 m and preferably of about 150 - 300 m, called "head", which is converted into hydrodynamic pressure at the height at which the turbines are positioned.

In order to have a reserve of water sufficient for the operation of the hydroelectric power plant, generally an artificial basin is created by means of the barrage of a river gorge with a dam: from this basin the water is conveyed through the "head" in a penstock down to the turbines, to the blades of which it transfers the kinetic energy.

Although hydroelectric power plants can have undoubted advantages with respect to thermoelectric or nuclear-thermoelectric power plants, they are not free from drawbacks.

Firstly, the requirement of a height difference between the basin and the turbines limits the choice of the possible sites for the installation of the plants. Secondly, the need for the creation of an artificial basin strongly affects the construction costs of the plant. Thirdly, the dams blocking the river gorges, block the solid transport of the rivers (sands and gravels) down to the sea where, because of the reduced or null solid deposit, there is the phenomenon of coast erosion. Finally, large hydroelectric basins can have environmental and socio-economic impacts of strong entity or gravity on the surrounding areas owing to the modification of the landscape and to the destruction of natural habitats, to the population movements, to the loss of agricultural areas and so on.

In order to solve the problems related to the need for the availability of large water masses and for a height difference between the water basin and the turbines, the realization of underwater hydroelectric power plants, wherein a penstock carries the water from the surface to the turbines positioned in depth has been considered.

The setting of hydroelectric power plants on the bed of the sea, of big lakes or of similar water basins having large dimensions eliminates the need of creating artificial basins and makes available nearly unlimited water resources for the plant.

Examples of underwater hydroelectric power plants of the kind described above are shown by way of example in UA23002U and in IT1117257.

However, the setting of a hydroelectric power plant realized in this way in the depths of a natural water basin poses the problem of the disposal of the water flowing from the turbines, because the large water masses used must be transferred from the hydroelectric power plant - which is at the same pressure as the inlet port of the penstock, and thus substantially at atmospheric pressure - to the surrounding environment, which is at a much higher pressure.

The main object of the present invention is to solve the aforesaid problem, by providing an underwater unit of hydroelectric power plant able to easily and effectively dispose the water masses flowing from the turbines.

Another object of the present invention is to provide an underwater hydroelectric power plant able to generate an electric power comparable to the one of conventional hydroelectric power plants.

### Disclosure of the Invention

Thanks to the presence of a penstock comprising an inlet section and an outlet section, said outlet section being provided at least at 100 m depth and preferably at about 150 - 300 m depth with respect to said inlet section, it is possible to provide the "head" which ensures to the water entering the unit according to the invention a sufficient speed for the operation of the turbine(s).

Preferably, said inlet section of said penstock is positioned close to the surface of the water basin.

Furthermore, thanks to the presence of at least a variable volume discharge tank positioned downstream the turbines for the generation of the electric power, the unit for the production of electric power according to the invention permits to effectively discharge in the surrounding environment the water masses used for the operation of the turbines themselves.

In a preferred embodiment there are provided at least two variable volume tanks which are alternatively filled and emptied, so that it is possible to ensure the continuous operation of the unit according to the invention.

Preferably, said variable volume tanks are expansion tanks.

It is to be noticed at this regard that US 2008/0159855 describes an underwater hydroelectric power plant comprising variable volume discharge tanks.

However, the hydroelectric power plant described in this document has remarkable drawbacks. Firstly, it does not provide any penstock and the inlet port for the water is positioned immediately over the turbine, so that the water entering the turbine does not have an elevated speed, because no "head" is provided and enormous low-speed water volumes are required for the operation of the described plant Secondly, this plant employs, for the emptying of the discharge tanks, a complex compressed-air system, which generates a huge increase in production costs, linked to the need of providing air under very high pressure at elevated depths under the level of the surface of the water basin. Finally, owing to the fact that the inlet port of the plant is in depth, thus under elevated pressure, it is probably necessary to provide an expensive pressurization system for keeping the environment of the turbine under the atmospheric pressure.

Advantageously, the unit for a hydroelectric power plant according to the invention is free from all these drawbacks.

A plurality of units according to the invention can be associated together for creating a modular hydroelectric power plant.

The modularity of the plant for the production of electric power thus obtained permits the continuous operation of the electric power plant according to the invention, even in case of breakdown, malfunctioning, maintenance and/or replacement of single units.

### Brief Description of the Drawings

Other advantages and features of the invention will be evident from the following detailed description of a preferred embodiment of the invention, given by way of non-limiting example, with reference to the attached drawings, wherein:
- Figure 1 is a schematic representation of the unit for the hydroelectric power plant according to the invention;
- Figure 2 is a schematic sectional front view of the room which houses the turbines of the unit of Figure 1;
- Figure 3 is a schematic sectional lateral view of the room of Figure 2;
- Figure 4 is a section along the line IV-IV of the room of Figure 2;
- Figure 5 is a schematic representation of the hydroelectric power plant according to the invention.

### Description of a Preferred Embodiment

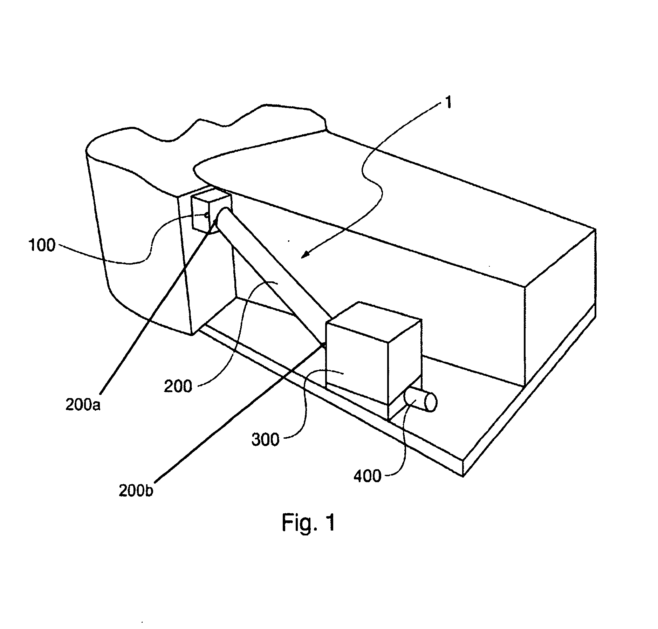

With reference to Figure 1, the underwater unit 1 of the hydroelectric power plant according to the invention is designed for being positioned in a water basin of any kind, either natural (sea, lake, and so on) or artificial. Said underwater unit 1 generally comprises:
- an inlet port 100 for the water which is used for the production of the electric power, said inlet port 100 being substantially provided at the surface of the water basin;
- an outlet port 400 for allowing the water used for the production of the electric power to return to the water basin, said outlet port 400 being provided in depth in said water basin;
- a piping arrangement which connects said inlet port with said outlet port, said piping arrangement including a penstock 200 which comprises an inlet section 200a and an outlet section 200b, the outlet section 200b of said penstock being at a depth greater than 100 m and preferably equal to 150 - 300 m with respect to said inlet section 200a of said penstock 200, so as to descend in depth in the water basin and thus to provide the "head" which permits to give the kinetic energy to the water; said penstock 200 is preferably inclined, so as to avoid cavitation problems inside the penstock itself;
- one or more turbines, preferably housed in a room 300, positioned along said piping arrangement, between said inlet port 100 and said outlet port 400, downstream said penstock 200 so that the kinetic energy of the water mass which flows in said penstock is transferred to said turbines; in room 300 are equally housed the alternators associated to said turbines for the transformation of the kinetic energy into electric power.

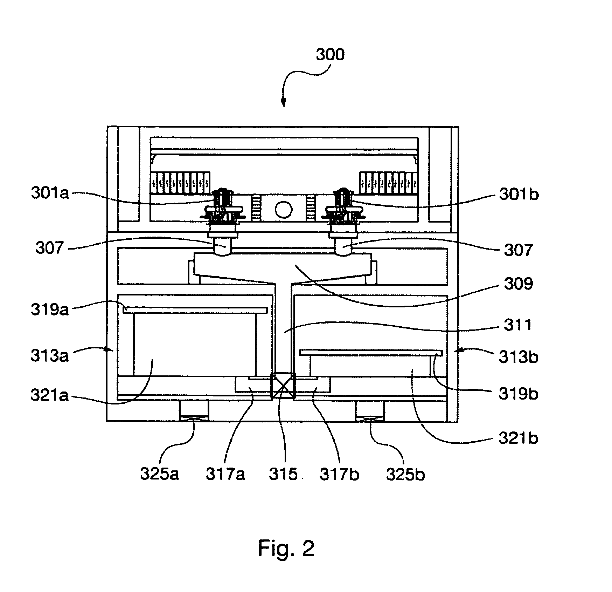

Said room 300 within which the kinetic energy is transmitted from the water mass flowing from the penstock to the turbines and successively transformed into electric power is shown more in detail in Figures 2 - 4.

The room 300 is watertight with respect to the external environment, so that the pressure inside it is equal to the pressure at the inlet port of unit 1, that is substantially equal to the atmospheric pressure.

Room 300 houses one or more turbines 301a-301f (six in the shown form of embodiment) which are arranged in such a way as to intercept the water flowing from the penstock 200, thanks to an extension 303 of the penstock itself which enters the room 300 and is divided in branches 305, each one connected with a respective turbine 301a-301f, so that the kinetic energy is transferred from the water to the blades of said turbines.

The turbines 301a-301f are preferably Pelton turbines, which are particular suitable for working in applications with high differences in height and reduced water flow rates; however, also turbines of other kind can be used.

The shaft of each turbine 301a-301f is connected in a known way with a corresponding alternator (not shown) which permits to transform the kinetic energy of the blades of said turbines into electric power.

According to the invention, the water used for the operation of the turbines 301a-301f is conveyed, through corresponding outlet channels 307, in a common transit chamber 309. Said common chamber is connected, through a duct 311, with at least a variable volume tank.

In particular, in the shown embodiment, two variable volume tanks 313a,313b are provided: the duct 311 is divided in two branches 317a,317b, each one connected with a corresponding variable volume tank 313a,313b; a three-way selecting valve 315 is provided at the bifurcation of the duct 311, so that the water flowing from the transit chamber 309 can be selectively addressed towards the one or the other tanks 313a,313b.

Said variable volume tanks 313a,313b are preferably realized as expansion tanks, even if it is possible to provide any other kind of variable volume tanks.

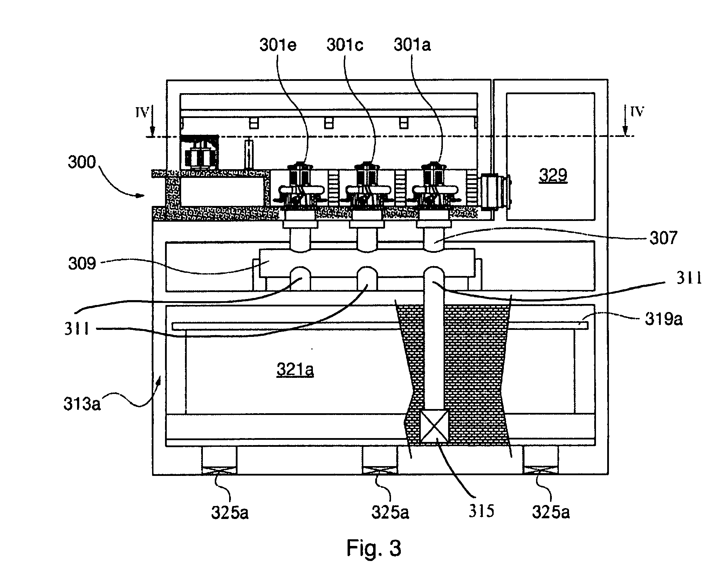

With reference in particular to Figures 2 and 3, each tank 313a,313b comprises a variable volume compensation chamber 321a,321b, separated from the rest of the tank by a movable wall 319a,319b.

Each tank is provided with a hydraulic driving system comprising one or more cylinders which operate on the movable wall 319a,319b of the respective compensation chamber 321a,321b for moving it away from or close to the base of the tank itself.

Each of the branches 317a, 317b of duct 311 communicates with the compensation chamber 321a,321b of the respective tank, so that when the selecting valve 315 puts into communication the duct 311 with the branch 317a (317b respectively), the water enters said compensation chamber 321a (321b respectively) of the tank 313a (313b respectively), causing a volume increase. In this filling phase the cylinders of the hydraulic system work for moving the movable wall 319a (319b respectively) away from the base of the tank, increasing the capacity of the compensation chamber.

The compensation chambers 321a,321b of tanks 313a,313b are also connected with the outlet port 400 of unit 1 according to the invention by means of one or more valves 325a,325b, for example non-return valves.

In this way, once the compensation chamber of a tank has reached the maximum possible expansion, it can be put in communication with the outlet port 400 and, through it, with the surrounding environment, so that the water contained in said tank can be discharged to the outside.

In this emptying phase, the cylinders of the hydraulic system operate for moving the movable wall close to the base of the tank, reducing the capacity of the compensation chamber. Obviously, before opening the valve 325a,325b of communication with the outlet port 400, the communication between the tank 313a,313b and the duct 311 is interrupted by operating opportunely on the selecting valve 315.

It is evident that only one variable volume tank would be sufficient for ensuring a correct operation of unit 1 according to the invention. However, in case of only one tank, the operation of unit 1 should be interrupted each time it is necessary to empty of said tank.

On the other hand, it will be evident to the person skilled in the art that the presence of two tanks 313a,313b which are alternatively put in communication with the duct 311, so as to be alternatively filled and emptied, ensures the continuous operation of unit 1 according to the invention: when the selecting valve 315 puts in communication the duct 311 with the first tank 313a, its compensation chamber 321a can be progressively filled; in this phase, the second tank 313b is in communication with the outlet port 400 through the valves 325b and is emptied; when the compensation chamber of the first tank reaches the maximum expansion, the selecting valve 315 is switched for putting in communication the duct 311 with the second tank 313b for the transfer of water inside it, whereas the valves 325b of the first tank 313a are opened for allowing the water contained inside it to return into the surrounding environment.

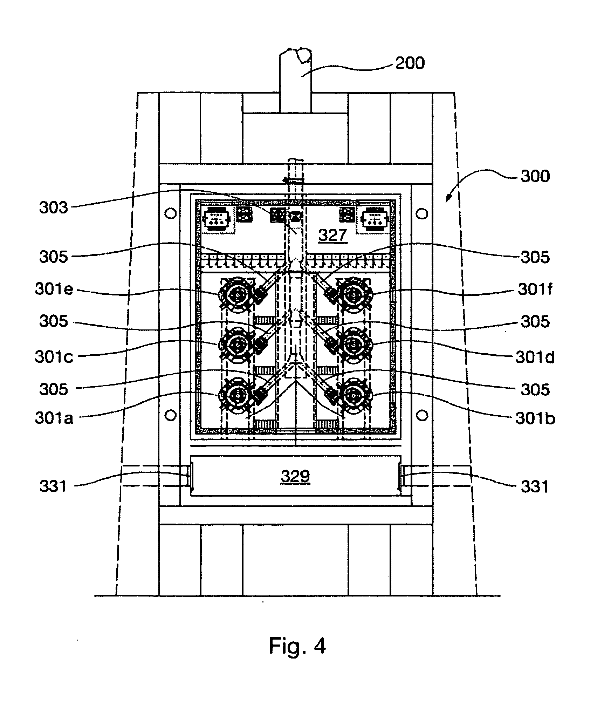

With reference to Figure 4, it is shown how the room 300, besides the room which houses the turbines and their alternators, comprises also another room 327 which houses the management, control and maintenance equipment of the mechanical and electrical equipment of unit 1.

Furthermore, in room 300 there is provided a passageway 329 for entering room 300 for maintenance; obviously, in order to carry out the inspection and the maintenance of unit 1 also when it is operating and is in depth, said passageway is closed at the ends by watertight bulkheads 331.

In the shown preferred embodiment, wherein six turbines 301a-301f are provided, assuming that the room 300 is laid at about 150 meters under the level of the water basin, the unit 1 according to the invention permits to obtain a delivered power of nearly 6000 kW.

According to the invention, in order to obtain a hydroelectric power plant with a power comparable to the one of conventional plants, it is possible to provide for the mutual association of a suitable number of units of the kind described above.

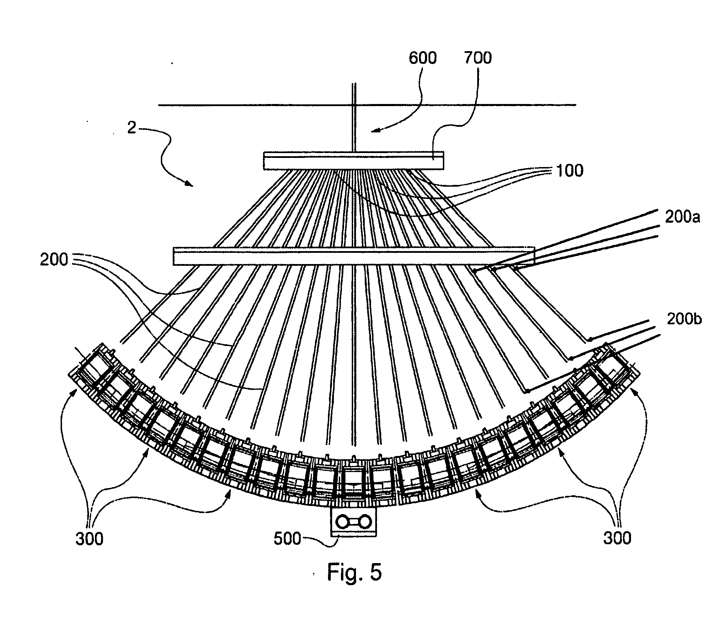

With reference to Figure 5, an electric power plant 2 so built is schematically shown.

Said electric power plant 2 comprises a feeding conduct 600 for the water of the water basin close to the surface, said conduct ending into a plenum 700 in communication with the inlet ports 100 of the units of the hydroelectric power plant. The penstocks 200 of said units depart from said plenum 700 and each of them ends inside the corresponding room 300 housing the turbines and the alternators for the production of electric power.

Advantageously, the rooms 300 of the different units are arranged side-by-side and in mutual communication thanks to the inspection passageways provided inside each unit.

A device for accessing the surface 500 is provided in communication with one of the units (in particular with the central unit in the illustrated example), so that from the surface the operators can easily access the rooms of all the units for inspection and maintenance operations.

In the example shown, the units are arranged in a spoke-like pattern along an arch of nearly 90° and twenty-one of them are provided, for a total produced power equal to nearly 120 MW.

Obviously, both the arrangement of the units and their number can vary according to the requirements.

For obvious reasons of ease of access and of transfer of the produced electric power towards the dry land, it is preferable to provide the positioning of the electric power plant close to the coast (for example, in correspondence of disused harbors), which limits the extension of the arch formed by the units arranged side-by-side at an angle lower than 180°.

However, it would be also possible to provide an electric power plant according to the invention positioned away from the coast and comprising a number of units sufficient for covering an entire arch of 360°, with a consequent increase of the generated power.

It is evident from the above description that the unit of the hydroelectric power plant according of the invention and the modular hydroelectric power plant formed by the juxtaposition of a plurality of such units permit to reach the objects set forth above, because they permit to obtain electric power by using the nearly unlimited water resources of large natural water basins and to easily, effectively and economically return the used water to said basins.

It is also evident that the embodiment described above has been provided by way of non-limiting example and that many variants are possible without departing from the scope of protection as defined by the appended claims.

## Claims

1. Unit for a hydroelectric power plant (1), suitable to be placed underwater in a water basin, comprising
- an inlet port (100) for feeding the water of said water basin to said unit;
- an outlet port (400) for discharging the water of said water basin from said unit to said water basin, said outlet port being provided at a depth greater than said inlet port;
- a piping arrangement (200,303,305,311,317a,317b) which connects said inlet port to said outlet port, said piping arrangement comprising a penstock (200) which comprises an inlet section (200a) an an outlet section (200b);
- one or more turbines (301a-301f) provided along said piping arrangement, downstream said penstock, arranged so as to intercept the water flowing therethrough, each of said turbines being associated to a corresponding alternator;
- one or more variable volume discharge tanks (313a, 313b) provided in said piping arrangement, between said turbines (301a-301f) and said outlet port (400);
**characterized in that**
said outlet section (200b) of said penstock (200) is at least at 100 meters of depth with respect to the inlet section (200a), so that the water which flows through said penstock acquires a corresponding kinetic energy.

2. Unit (1) according to claim 1, wherein said variable volume discharge tanks are expansion tanks (313a,313b) comprising a variable volume compensation chamber (321a, 321b).

3. Unit (1) according to claim 1 o 2, wherein two of said variable volume discharge tanks (313a,313b) are provided.

4. Unit (1) according to claim 3, wherein said piping arrangement is provided with a selecting valve (315), arranged between said turbines and said variable volume discharge tanks for selectively connecting one of said two
tanks with said piping arrangement.

5. Unit (1) according to any of the preceding claims, wherein a plurality of turbines (301a-301f) are provided, said piping arrangement providing a plurality of branches (305) provided between said penstock and said turbines so as to connect said piping arrangement with each of said turbines.

6. Unit (1) according to claim 5, wherein downstream each of said turbines said piping arrangement provides a water outlet channel (307), said outlet channels (307) being connected to a common transit chamber (309), connected to said variable volume tank(s).

7. Unit (1) according to any of the preceding claims, wherein said one or more turbines as well as the corresponding alternators are housed in a watertight room (300).

8. Unit (1) according to claim 7, wherein said room (300) includes a passageway (329) for entering the room itself, said passageway being provided at its ends with watertight bulkheads (331).

9. Unit (1) according to any of the preceding claims, in wherein said inlet port (100) is provided close to the surface of said water basin.

10. Unit (1) according to claim 9, wherein said inlet section of said penstock (200) is provided close to the surface of said water basin.

11. Unit (1) according to claim 1, wherein said outlet section of said penstock is at a depth with respect to said inlet section of said penstock equal to nearly 150 - 300 m.

12. Plant for electric power production (2), **characterized in that** it comprises a plurality of units for electric power production (1) according to any of the claims 1 to 11.

## Patentansprüche

1. Einheit für ein hydroelektrisches Kraftwerk (1), welche Einheit dazu ausgebildet ist, unter Wasser in einem Wasserbecken angeordnet zu werden, umfassend
- eine Einlassöffnung (100) zur Zuführung des Wassers des Wasserbeckens in die Einheit;
- eine Auslassöffnung (400) zum Abfluss des Wassers des Wasserbeckens aus der Einheit in das Wasserbecken, wobei die Auslassöffnung in einer größeren Tiefe als die Einlassöffnung vorgesehen ist;
- eine Leitungsanordnung (200, 303, 305, 311, 317a, 317b), die die Einlassöffnung mit der Auslassöffnung verbindet, wobei diese Leitungsanordnung eine Druckleitung (200) umfasst, die einen Einlassabschnitt (200a) und einen Auslassabschnitt (200b) aufweist;
- eine oder mehrere Turbine(n) (301a-301f), die entlang der Leitungsanordnung, abwärts von der Druckleitung, angeordnet sind und dazu ausgebildet sind, das dadurch fließende Wasser abzusperren, wobei jede dieser Turbinen einem entsprechenden Wechselstromgenerator zugeordnet ist;
- einen oder mehrere volumenveränderbare Abgabebehälter (313a, 313b), die in der Leitungsanordnung, zwischen den Turbinen (301a-301f) und der Auslassöffnung (400), vorgesehen sind;
**dadurch gekennzeichnet, dass** der Auslassabschnitt (200b) der Druckleitung (200) mindestens in 100 Meter Tiefe relativ zu dem Einlassabschnitt (200a) liegt, sodass das durch die Druckleitung fließende Wasser eine entsprechende kinetische Energie gewinnt.

2. Einheit (1) nach Anspruch 1, wobei die volumenveränderbaren Abgabebehälter als Ausdehnungsgefäße (313a, 313b) ausgebildet sind, die eine volumenveränderbare Ausgleichskammer (321a, 321b) umfassen.

3. Einheit (1) nach Anspruch 1 oder 2, wobei zwei solche volumenveränderbare Abgabebehälter (313a, 313b) vorgesehen sind.

4. Einheit (1) nach Anspruch 3, wobei die Leitungsanordnung mit einem zwischen den Turbinen und den volumenveränderbaren Abgabebehältern angeordneten Wechselventil (315) versehen ist, um einen der beiden Behälter mit der Leitungsanordnung selektiv zu verbinden.

5. Einheit (1) nach einem der vorhergehenden Ansprüche, wobei eine Mehrzahl von Turbinen (301a-301f) vorgesehen ist, wobei die Leitungsanordnung eine Mehrzahl von zwischen der Druckleitung und den Turbinen angeordneten Abzweigungen (305) aufweist, um die Leitungsanordnung mit jeder der Turbinen zu verbinden.

6. Einheit (1) nach Anspruch 5, wobei abwärts von jeder der Turbinen die Leitungsanordnung einen Auslasskanal (307) für das Wasser aufweist, wobei diese Auslasskanäle (307) an eine gemeinsame Durchlaufkammer (309) angeschlossen sind, die mit dem/den volumenveränderbaren Abgabebehälter (n) verbunden ist.

7. Einheit (1) nach einem der vorhergehenden Ansprüche, wobei diese eine oder mehrere Turbine(n) sowie die entsprechenden Wechselstromgeneratoren innerhalb eines wasserdichten Raums (300) aufgenommen ist/sind.

8. Einheit (1) nach Anspruch 7, wobei dieser Raum (300) einen Korridor (329) für den Zugang zu dem Raum selbst aufweist, wobei dieser Korridor an seinen Enden mit wasserdichten Schotten (331) versehen ist.

9. Einheit (1) nach einem der vorhergehenden Ansprüche, wobei die Einlassöffnung (100) in der Nähe von der Oberfläche des Wasserbeckens vorgesehen ist.

10. Einheit (1) nach Anspruch 9, wobei der Einlassabschnitt der Druckleitung (200) in der Nähe von der Oberfläche des Wasserbeckens vorgesehen ist.

11. Einheit (1) nach Anspruch 1, wobei sich der Auslassabschnitt der Druckleitung in einer Tiefe von ungefähr 150 - 300 m relativ zu dem Einlassabschnitt der Druckleitung liegt.

12. Kraftwerk (2) zur Erzeugung von elektrischer Energie, **dadurch gekennzeichnet, dass** es eine Mehrzahl von Einheiten (1) zur Erzeugung von elektrischer Energie nach einem der Ansprüche 1 bis 11 umfasst.

## Revendications

1. Unité pour une centrale hydroélectrique (1), apte à être placée sous l'eau dans un bassin d'eau, comprenant:
un orifice d'entrée (100) pour alimenter l'eau dudit bassin d'eau à ladite unité;
un orifice de sortie (400) pour décharger l'eau dudit bassin d'eau de ladite unité audit bassin d'eau, ledit orifice de sortie étant situé à une profondeur plus grande que ledit orifice d'entrée;
un agencement de tuyauterie (200, 303, 305, 311, 317a, 317b) reliant ledit orifice d'entrée audit orifice de sortie, ledit agencement de tuyauterie comprenant une conduite forcée (200) qui comprend une section d'entrée (200a) et une section de sortie (200b);
une ou plusieurs turbines (301a-301f) prévues le long dudit agencement de tuyauterie, en aval de ladite conduite forcée,
et agencées de manière à intercepter l'eau écoulant à travers ledit agencement de tuyauterie, chacune desdites turbines étant associée à un alternateur correspondant;
un ou plusieurs réservoirs de déchargement à volume variable (313a, 313b) prévus entre lesdites turbines (301a-301f) et
ledit orifice de sortie (400);
**caractérisée en ce que** ladite section de sortie (200b) de ladite conduite forcée (200) est à au moins 100 mètres de profondeur par rapport à la section d'entrée (200a), de telle sorte que l'eau qui s'écoule à travers ladite conduite forcée acquiert une énergie cinétique correspondante.

2. Unité (1) selon la revendication 1, dans laquelle lesdits réservoirs de déchargement à volume variable sont des vases d'expansion (313a, 313b) comprenant une chambre de compensation à volume variable (321a, 321b).

3. Unité (1) selon la revendication 1 ou 2, dans laquelle deux desdites réservoirs de déchargement à volume variable (313a, 313b) sont prévus.

4. Unité (1) selon la revendication 3, dans laquelle ledit agencement de tuyauterie est pourvu d'une soupape de sélection (315), agencée entre lesdites turbines et lesdits réservoirs de déchargement à volume variable pour connecter sélectivement l'un desdits deux réservoirs audit agencement de tuyauterie.

5. Unité (1) selon l'une quelconque des revendications précédentes, dans laquelle une pluralité de turbines (301a-301f) sont prévues, ledit agencement de tuyauterie ayant une pluralité de branches (305) prévues entre ladite conduite forcée et lesdites turbines de manière à connecter ledit agencement de tuyauterie à chacune desdites turbines.

6. Unité (1) selon la revendication 5, dans laquelle en aval de chacune desdits turbines ledit agencement de tuyauterie comporte un canal de sortie d'eau (307), lesdits canaux de sortie (307) étant reliés à une chambre de passage commune (309), reliée audit/auxdits réservoir(s) à volume variable.

7. Unité (1) selon l'une quelconque des revendications précédentes, dans laquelle lesdites une ou plusieurs turbines ainsi que les alternateurs correspondants sont logés dans une chambre étanche à l'eau (300).

8. Unité (1) selon la revendication 7, dans laquelle ladite chambre (300) comprend un passage (329) pour entrer dans la chambre même, ledit passage étant pourvu à ses extrémités de cloisons étanches à l'eau (331).

9. Unité (1) selon l'une quelconque des revendications précédentes, dans laquelle ledit orifice d'entrée (100) est prévu à proximité de la surface dudit bassin d'eau.

10. Unité (1) selon la revendication 9, dans laquelle ladite section d'entrée de ladite conduite forcée (200) est prévue à proximité de la surface dudit bassin d'eau.

11. Unité (1) selon la revendication 1, dans laquelle ladite section de sortie de ladite conduite forcée est à une profondeur par rapport à ladite section d'entrée de ladite conduite forcée d'environ 150 - 300 mètres.

12. Centrale pour la production d'énergie électrique (2), **caractérisée en ce qu'**elle comprend une pluralité d'unités pour la production d'énergie électrique (1) selon l'une quelconque des revendications 1 à 11.
